# EUROPEAN PATENT APPLICATION

(11) **EP 1 466 544 A1**
(43) Date of publication of application: **13.10.2004**
(21) Application number: 04425215.3
(22) Date of filing: 29.03.2004
(51) Int. Cl.: A47J 27/14, A47J 43/04

(54) **Container with device for stirring and serving polenta**

(30) Priority: 08.04.2003 IT BS20030036
(71) Applicant: Rolfi, Emilio, 25030 Roncadelle (Brescia) (IT); Zanotti, Adriano, 25030 Castelmella (Brescia) (IT); Polonini, Marco, 25030 Roncadelle (Brescia) (IT)
(72) Inventor: Rolfi, Emilio, 25030 Roncadelle (Brescia) (IT); Zanotti, Adriano, 25030 Castelmella (Brescia) (IT); Polonini, Marco, 25030 Roncadelle (Brescia) (IT)
(74) Representative: Sangiacomo, Fulvia

(57) **Abstract**

The invention concerns a container or pot for preparing polenta which has a body (11) with an internal semi-cylindrical bottom (12), a turning stirrer (15) on the bottom of the body, a gearmotor device for controlling the rotation of the internal stirrer, and a distribution outlet (17) in one wall of said body on a level with its bottom. An obturator means (20) is associated with the distribution outlet which moves between a closing and opening position for a controlled distribution of the polenta by means of the internal stirrer.

## Description

### Field of the Invention

The present invention relates to a container or pot for cooking polenta.

### Prior Art

Polenta is a dish made of maize flour cooked in water in a container or pot placed on or over a source of heat. During cooking the polenta has to be continually stirred in order to avoid lumps forming and to make sure it is homogeneous.

At present, besides by hand, polenta can be stirred by mechanical systems associated with the container or pot. These systems use a stirrer in the shape of spatula, driven by a gearmotor but only able to carry out the stirring operation. When cooked, to be served, the polenta is either emptied out of the pot or container or scooped out using a spoon or a ladle.

As far as is known, no containers for cooking polenta and able also to serve it without having either to empty it out or to manually remove it from the container, have ever been presented. On the other hand, neither the container usually used nor the stirring system known to date are suitable to be used to gradually serve the polenta.

### Objects and Summary of the Invention

One of the objects of this invention therefore is to provide a container or pot equipped both for stirring the polenta while it is being cooked and to serve it gradually and directly from the container when needed.

Another object of the invention is to provide a container or pot particularly suitable for restaurants, for homes, etc., where a need for prolonged production of polenta is required and where it is advantageous to facilitate distribution and doses of the food even while it is being stirred to keep it consistent.

A still further object of the invention is to provide a container or pot for polenta having numerous advantages such as: uniform stirring; possibility of adding the ingredients while the container is being used so as to continue to produce polenta; maintaining of the characteristics of the polenta over a period of time, as the ingredients can be stirred even with the container closed by a lid, so as to avoid contact with the external ambient; facilitate serving and dosing without having to access the inside of the container.

Furthermore, the container can be reheated over a flame or electric plate or induction heating or be equipped autonomously with electric heating coils. In this latter case the container can be positioned and used in the same way not only in a kitchen, but also directly in a dining room. In addition, the container of the invention, besides singularly, can be used in association with other similar containers, placed perhaps side by side in a same body, to be able to prepare and have different tastes of polenta.

These objects are achieved, in compliance with the invention, with a container or pot having a body with an internal semi-cylindrical bottom, a turning stirrer placed horizontally on the bottom of the body, a gearmotor device positioned on one side of said body to control the internal stirrer, a distribution outlet shaped in one wall of said body level with its bottom, and an obturator means associated with the distribution outlet and moving between a closed position and an open position of said outlet for a controlled distribution of the polenta benefiting from the action of the internal stirrer.

### Brief Description of the Drawings

This invention will however be described more in detail in the description that follows made
with reference to the attached drawings, which are indicative and not limiting, in which:

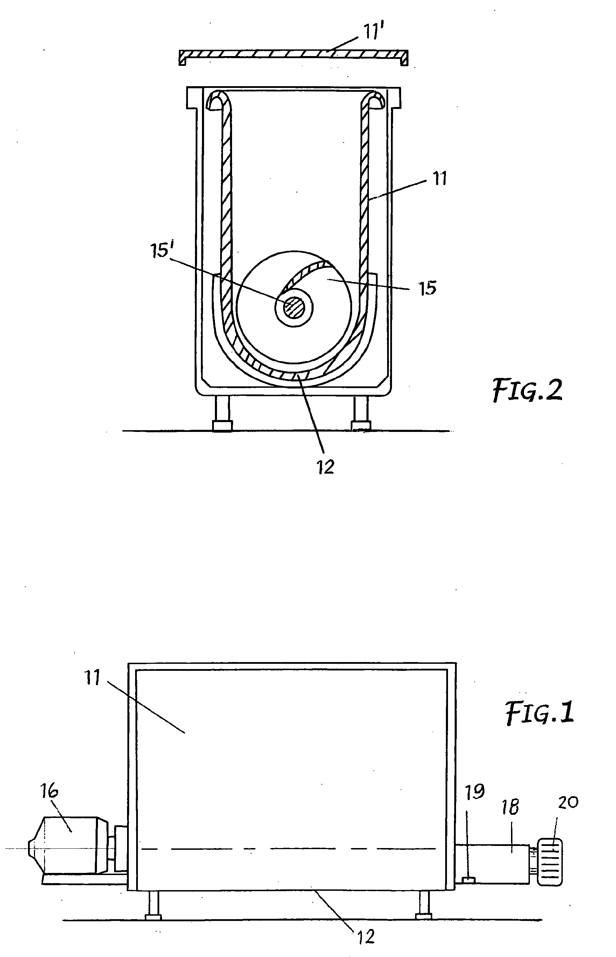

Fig. 1 is a front on external view of the container for polenta;
Fig. 2 is a cross section of the container
Fig. 3 is a longitudinal cross section with distribution outlet closed; and
Fig. 4 is a cross section of an enlarged particular of the distribution outlet when open.

### Detailed Description of the Invention

As shown, the container for cooking polenta includes a body 11 with a possible respective lid 11'. The body 11 has an internal semi-cylindrical bottom 12 formed, at its ends, by two opposite walls 13,14. Inside the body 11, in line with the semi-cylindrical bottom 12, is positioned a stirrer 15 turning on a horizontal axis 15', supported on the two opposite walls 13,14. The stirrer 15 has the shape of a continuous or discontinuous, single or dual direction Archimedean screw. It is powered by an electric gearmotor 16 supported on the wall 13, on the outside of the body 11.

In the opposite wall 14 of the body 11, on a level with the bottom, there is a distribution outlet 17 in line with which is fixed a sleeve 18 protruding out of said wall and having an outlet passage 19 facing downwards. In the sleeve 18 there is an obturator means, that is a plug 20 moving longitudinally between a forward closed position and a retracted open position of the distribution outlet 17 and the discharge passage 19.

The obturator means 20, has at least one peripheral seal 21 to form a seal inside the sleeve , both in the closed and open positions.

The obturator means 20 is associated with a means to move it from one position to the other. In the example shown the plug 20 has a long pitch thread 22 with which it engages a pin locator 23 fixed radially to the sleeve 18 so that the plug moves forward and backward with a rotary - travelling motion following a manual clockwise and anticlockwise rotation. But, evidently, the longitudinal movements of the obturator means from one position to another may be achieved also by other means, for example by a linear traverse movement, without however moving outside the field of the invention.

For heating, the container can be placed on or over any source of heat or be equipped with electric coils.

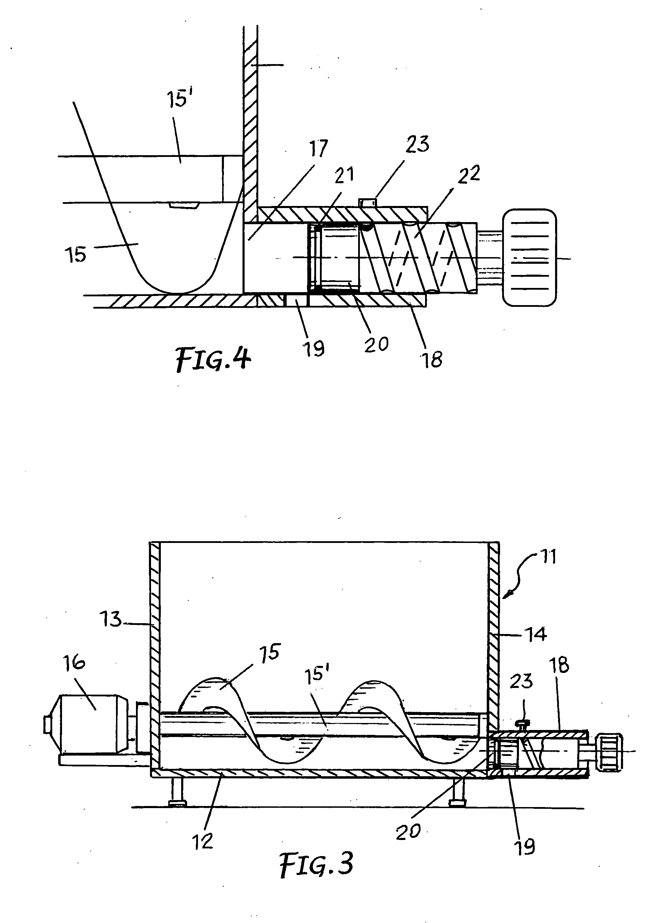

When the obturator means 20 is in the forward closed position, its internal end section is in line with the internal surface of the contiguous wall 14 of the body of the container, and the seal 21 separates the distribution outlet 17 from the discharge passage 19 as shown in Fig. 3. In this condition, the rotation of the stirrer 15 results in a continuous stirring of the polenta in the container without the risk of deposits tending to form a block on a level with the distribution outlet. When the obturator is moved back, its seal 21 also moves back positioning itself in an open position of the distribution outlet 17 and of the discharge passage 19 as shown in Fig. 4. Now, the stirring action tends to push the polenta through the distribution outlet 17 and from the latter to the discharge passage to be dosed, collected and served as required.

## Claims

1. Container or pot for preparing polenta, **characterised by** a body (11) having an internal semi-cylindrical bottom (12), a turning stirrer (15) positioned horizontally on the bottom of said body, a gearmotor device placed on one side of said body to control the turning of the internal stirrer, a distribution outlet (17) built in one wall of said body on a level with its bottom, and a obturator means (20) associated with the distribution outlet and which can move between a closed position and an open position of said outlet in order to control the distribution of the polenta benefiting from the action of the internal stirrer.

2. Container for preparing polenta according to claim 1, in which the bottom (12) of said body is closed at its ends by two opposite walls (13, 14), the turning stirrer (15) is supported between said two opposite walls and is made up of an Archimedean screw, the gearmotor device is positioned on the outside of one of the said walls and the distribution outlet is in the opposite wall.

3. Container for preparing polenta according to claims 1and 2, in which a sleeve (18) is associated with the distribution outlet (17) having a discharge passage (19) facing downwards, and in which said sleeve (18) there is a an obturator means (20) moving between a forward closed position and a retracted open position of the distribution outlet (17) and the discharge passage (19).

4. Container for preparing polenta according to claim 3, in which said obturator means is movable between said closed and open positions through a longitudinal rotating-translation movement and is fitted with at least one peripheral ring seal (21) for sealing inside the sleeve (15) both in the closing and opening positions.

5. Container for preparing polenta according to claim 3, in which said obturator means is movable between said closed and open positions through a longitudinal linear movement and is fitted with at least one peripheral ring seal (21) for sealing inside the sleeve (15) both when in the closed and open positions.

6. Container for preparing polenta according to any of the previous claims, in which the stirrer has a continual or discontinuous, one or dual direction screw, and the internal end of the obturator means, when the latter is in the forward closed position, is in line with the internal surface of the adjacent wall of the body of the container.
